(19) Europäisches Patentamt
European Patent Office
Office européen des brevets

(11) **EP 1 840 361 A1**

(12) **EUROPÄISCHE PATENTANMELDUNG**

(43) Veröffentlichungstag:
**03.10.2007 Patentblatt 2007/40**

(51) Int Cl.:
*F02D 41/22* *(2006.01)*      *F02D 35/02* *(2006.01)*
*G01M 13/00* *(2006.01)*      *G01N 29/14* *(2006.01)*
*G01H 1/00* *(2006.01)*

(21) Anmeldenummer: 07103330.2

(22) Anmeldetag: **01.03.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **31.03.2006 EP 06405136**

(71) Anmelder: **Wärtsilä Schweiz AG**
**8401 Winterthur (CH)**

(72) Erfinder:
• **Amoser, Dr., Matthias**
**8492, Wila (CH)**
• **Schäpper, Daniel**
**8610, Uster (CH)**
• **Keller, Heinz**
**8404, Winterthur (CH)**

(74) Vertreter: **Sulzer Management AG**
**Patentabteilung / 0067**
**Zürcherstrasse 14**
**8401 Winterthur (CH)**

(54) **Einrichtung zur Detektion eines Siganlverlaufs eines Geräuschs**

(57)     Die Erfindung betrifft eine Einrichtung zur Detektion eines Signalverlaufs eines Geräuschs in einer Vorrichtung (1), insbesondere eines Betriebsgeräusches einer Brennkraftmaschine, umfassend einen Sensor (8), welcher zur Detektion des Geräusches akustisch an die Vorrichtung angekoppelt ist. Eine Filtereinrichtung ist vorgesehen, mit welcher ein vorgebbarer Bereich des Frequenzspektrums des Geräuschs zur Erzeugung des Signalverlaufs herausfilterbar ist.

Fig.1

EP 1 840 361 A1

**Beschreibung**

Die Erfindung betrifft eine Einrichtung und ein Verfahren zur Detektion eines Signalverlaufs eines Geräuschs in einer Vorrichtung, insbesondere eines Betriebsgeräuschs. Ein Mikroereignis, wie beispielsweise ein Mikroriss erzeugt ein Geräusch, das von einem Sensor, der akustisch an die Vorrichtung gekoppelt ist, detektierbar ist. Die Vorrichtung umfasst insbesondere eine Brennkraftmaschine mit einer Anordnung mit einem Kolben, sowie einer Zylinderanordnung, insbesondere einem Zylindereinsatz, in welchem sich der Kolben hin- und herbewegt. Der Kolben kann mit zumindest einem Kolbenring ausgestattet sein.

Aus der JP61135939 ist bekannt, dass das Geräusch eines in einem Zylinderliner gleitenden Kolbenrings von einem akustischen Sensor aufgenommen wird. Das Signal wird in einer so genannten Bruch-Detektionseinheit mit gespeicherten Frequenzdaten verglichen. Hier handelt es sich um die Erkennung eines gebrochenen Kolbenrings mittels der Messung von den ihm ausgesandten Vibrationen zur Fehlerdetektierung. Zudem liegen die Frequenzbereiche für den gebrochenen Kolbenring weit weg von den Frequenzbereichen, die als charakteristisch für ein Mikroereignis angesehen werden.

Ein System zur Kontrolle eines Gleitpaars wird in EP-A- 0 706 039 offenbart welches eine Überwachung des Schmiermittelfilms und der tatsächlichen Reibungsverhältnisse an jeder Stelle des Gleitpaars Zylindereinsatz und Kolben bzw. Kolbenring erlaubt.

Aus der EP1505270 sind eine Vorrichtung und ein Verfahren bekannt, um mittels eines Sensors einen Parameter für den lokalen Zustand des Schmiermittelfilms zu ermitteln, der eine für den Schmiermittelfilm charakteristische Kenngrösse darstellt, welcher in eine Ansteuereinheit einspeisbar ist, welche Regelmittel umfasst, welche die Schmiermitteldüse ansteuern, um den Parameter lokal auf der Lauffläche der Zylinderwand zu optimieren. Aus EP1505270 ist weiters bekannt, einen Sensor einzusetzen, der Schallschwingungen, sogenannte Körperschallschwingungen detektiert. Das hierbei angewandte Messprinzip beruht auf der Detektion von Schallschwingungen, sogenannten Körperschallschwingungen, die die verschiedenen Komponenten der Hubkolbenbrennkraftmaschine im Betriebszustand aussenden. Dabei ist der passive Körperschallsensor selbst nur ein Detektor, z.B. ein piezoelektrischer Detektor, im Prinzip ein Mikrofon, das die Körperschallwellen, die in der Hubkolbenbrennkraftmaschine erzeugt werden, detektiert und der Ansteuereinheit zum Beispiel in Form eines elektrischen Signals zur weiteren Auswertung zuführt. Aus einem Muster der detektierten Körperschallwellen lässt sich dann beispielsweise auf die charakteristische Kenngrösse des Schmiermittelfilms, insbesondere auf die Dicke des Schmiermittelfilms an einem bestimmbaren Ort auf der Lauffläche der Zylinderwand schliessen. Die Körperschallwellen können auch als akustische Emissionen bezeichnet werden. Das sind elastische Wellen elastischer Spannungen, also elastische Wellen, die im Wesentlichen dadurch entstehen, dass zum Beispiel die Komponenten der Hubkolbenbrennkraftmaschine, wie Zylinder, Kolben, Kolbenringe usw. Spannungsenergie absorbieren und wieder abgeben. Akustische Wellen können somit zum Beispiel aufgrund plötzlicher Spannungsänderungen im Material auftreten, insbesondere durch Mikroereignisse wie Mikrobrüche, Mikrorisse oder durch spontane mikroskopische Materialverzerrungen. Bei Zylindern, in Laufflächen von Zylinderwänden, Kolben, Kolbenringen usw., die in der Regel zumindest teilweise aus Metallen oder beschichteten Metallen bestehen, liegen typische lineare Ausdehnungen der zuvor exemplarisch genannten Mikroereignisse bei ca. 1 μm bis etwa zu 100 μm, insbesondere 10 μm bis etwa zu 100 μm für einen weichen Stahl oder einen Stahl mittlerer Härte, sowie insbesondere 1 μm bis 10 μm für eine feinkörnige Aluminiumlegierung. Dabei ist zwischen der Geschwindigkeit der Rissausbreitung und der Schallgeschwindigkeit, das heisst der Geschwindigkeit der bei der Rissausbreitung entstehenden Schallwelle zu unterscheiden. Erstere liegt in einem Bereich von 50 bis 600 m/s, während letztere in Metallen zwischen 1000 und 3700 m/s betragen kann. Dabei ist noch anzumerken, dass die Schallgeschwindigkeit in der Luft um circa eine Grössenordnung tiefer liegt als die Schallgeschwindigkeit in Metallen, nämlich nur bei 300 m/s. Insbesondere wurden für Aluminium oder Nickel Schallgeschwindigkeiten im Bereich von 3100 und 3200 m/s, für Eisen oder Vanadium Schallgeschwindigkeiten im Bereich von 3000 und 3100 m/s, für Chrom oder Molybdän Schallgeschwindigkeiten im Bereich von 3400 bis 3600 m/s gemessen. Für Kupfer liegt die gemessene mittlere Schallgeschwindigkeit tiefer, nämlich um die 2450 m/s. Es ist daher anzunehmen, dass die Schallgeschwindigkeiten von Legierungen, die zum grössten Teil aus Kombinationen der erwähnten Elemente bestehen, die Schallgeschwindigkeit vorzugsweise innerhalb des für Metalle angegebenen Bereichs liegt. Die Amplitude und / oder das Frequenzspektrum der dabei ausgesandten akustischen Welle, eventuell unter Berücksichtigung der Dämpfung im Material, ist ein Mass für die Stärke, das Ausmass und die Art des Mikroereignisses. Akustische Wellen sind somit sehr unmittelbar mit Ereignissen wie Mikrobrüchen, Mikrorissen oder mit spontanen mikroskopischen Materialverzerrungen verknüpft und damit sehr gut geeignet, zerstörungsfrei das gesamte Volumen eines zu untersuchenden Objekts, auch mit sehr komplizierter geometrischer Struktur, praktisch in Echtzeit zu untersuchen.

In Metallen sind die Hauptquellen akustischer Emissionen somit sehr häufig plastische Deformationsprozesse und das Wachstum von Schäden, wie zum Beispiel das Wachstum von Rissen oder Brüchen im Material, die charakteristische Energieverteilungen aufweisen. Unter anderem kann durch diese und andere Prozesse ein explosionsartiges Schallereignis, ein so genannter Burst, erzeugt werden, der, abhängig vom Typ und der Grösse der Schallquelle und in Abhängigkeit von der Schallgeschwindigkeit des betrachteten Materials, typischerweise Frequenzen vom hörbaren bis in den hohen Ultraschallbereich umfassen kann. Dabei werden sowohl akustische Kompressionswellen, also longitudinale Wellen, als auch transversal polarisierte Wellen erzeugt, deren Spektren, Polarisation, Ausbreitungsgeschwindigkeiten, relative Dämpfung und relative Intensitäten Aufschlüsse über die Mikroereignisse geben können.

Es ist eine Aufgabe der Erfindung, charakteristische Informationen über das Geräusch selbst aus dem Signalverlauf zu ermitteln.

Eine derartige Analyse erfordert jedoch in ihrer gesamten Präzision die Verarbeitung von grossen Mengen an Datenmaterial, von welchen im Allgemeinen nur ein Bruchteil von Interesse ist.

Es ist daher eine weitere Aufgabe der Erfindung, das Datenmaterial, welches vom Sensor bereitgestellt wird, derart zu reduzieren, dass einerseits die Verarbeitung vereinfacht und beschleunigt wird und andererseits eine Filterung derart vorgenommen wird, dass bekanntermassen irrelevantes Datenmaterial nicht in die Verarbeitung eingeht.

Die Aufgabe der Erfindung wird durch Anspruch 1 gelöst, welcher eine Einrichtung zur Detektion eines Signalverlaufs eines Geräuschs in einer Vorrichtung zum Gegenstand hat. Insbesondere handelt es sich um eine Einrichtung zur Detektion eines Betriebsgeräusches einer Brennkraftmaschine. Die Einrichtung umfasst einen Sensor, welcher zur Detektion des Geräusches akustisch an die Vorrichtung angekoppelt ist. Eine Filtereinrichtung ist vorgesehen, mit welcher ein vorgebbarer Bereich des Frequenzspektrums des Geräuschs zur Erzeugung des Signalverlaufs herausfilterbar ist.

Die Einrichtung findet beispielsweise Einsatz in einer Brennkraftmaschine, wie insbesondere in einem Grossdieselmotor. Eine derartige Brennkraftmaschine umfasst zumindest einen Kolben, der in einem Zylindereinsatz gleitend gelagert ist. Die innere Oberfläche des Zylindereinsatzes ist als Gleitfläche mit entsprechenden mechanischen Eigenschaften ausgebildet. Im Zylindereinsatz findet die Hin- und Herbewegung des Kolbens statt, wobei die Kolbenoberfläche entlang der Oberfläche des Zylindereinsatzes entlang gleitet. Um zu vermeiden, dass der Kolben selbst entlang der Oberfläche des Zylindereinsatzes gleitet, umfasst der Kolben zumeist zumindest einen Kolbenring, welcher die dem Zylindereinsatz gegenüberliegende Oberfläche ausbildet. Ein derartiger, in einer Brennkraftmaschine verwendeter Kolbenring weist eine Gleitfläche auf, die durch ein Zusammenspiel mit einem Schmiermittel eine Dichtung zwischen einem Zylindereinsatz und einem Kolben ausbilden kann. In einem Ausführungsbeispiel befindet sich die Gleitfläche insbesondere auf einer Randzone des Kolbenrings. Für diese Gleitfläche kann zumindest teilweise ein Verschleissabtrag bis zu einer maximalen Verschleisstiefe vorgesehen sein. Durch die Bewegung der Gleitfläche relativ zum Zylindereinsatz werden Geräusche erzeugt, die vom Gleitverhalten abhängen, beziehungsweise Rückschlüsse auf das Gleitverhalten zulassen. Diese Geräusche versetzen während jeder Bewegung des Kolbens und/oder Kolbenrings vor einem Sensor eine Membran oder ein anderes schwingungsfähiges Mittel, wie insbesondere ein piezoelektrisches Mittel in Schwingung, so dass eine durch den Sensor registrierbare Information über die Art der Reibung des Reibungspaars, wie insbesondere des Kolbens oder Kolbenrings und des Zylindereinsatzes einer Brennkraftmaschine detektierbar ist. Eine vorteilhafte Anordnung des Sensors, insbesondere eines stationären Sensors, befindet sich im Zylinderdeckel, oder im Zylindereinsatz, wobei ein Sensor der piezoelektrischen Bauart grundsätzlich an beliebigen Orten anbringbar ist, da er insbesondere durch eine Klebeverbindung mit der Deckelwand, der Zylinderwand oder ähnlichem verbindbar ist. Im Prinzip ist es daher auch möglich, den Sensor an einem beweglichen Bauteil, wie beispielsweise einem Kolben und/oder einem Kolbenring einer Brennkraftmaschine, anzubringen. Alternativ zu einer Klebeverbindung besteht auch die Möglichkeit, den Sensor auf eine dünne Ölschicht aufzulegen und mit einer fixierbaren Klammer anzupressen. Insbesondere kann eine Fixierung der Klammer mit magnetischen Mitteln vorgesehen sein.

Durch den Sensor sind Geräusche derart detektierbar, dass Schallwellen, die durch den Sensor erfassbar sind, in elektrische Ausgangssignale transformierbar sind. Ein im Sensor angeordneter Rezeptor wird aufgrund der auftreffenden Schallwellen in Schwingungen versetzt. Vorteilhafterweise kommt ein piezoelektrischer Sensor zum Einsatz, in welchem die von der Körperschallwelle empfangene Schwingung zu einer Polarisation des piezoelektrischen Kristalls führt, die bei dem Vorhandensein von elektrischen Ladungsträgern in einem Stromkreis zu messbaren Spannungsschwankungen führt. Die Spannungsschwankungen entsprechen in diesem Fall der zeitlichen Abfolge der Amplituden der auftreffenden Schallwellen. Die periodischen Spannungsschwankungen entsprechen damit innerhalb einer Bandbreite dem Sensoreingangssignal in Form der auftreffenden Schallwelle.

Somit ergibt sich für die Verarbeitung der Sensoreingangssignale nach einem ersten Ausführungsbeispiel der Fall, dass die Bandbreite der Sensoreingangssignale im wesentlichen innerhalb der Bandbreite der Schwingungen liegt, die vom Sensor überhaupt erkannt und verarbeitet werden können. In der Folge bleibt das Frequenzspektrum des Sensoreingangssignals im Wesentlichen im Ausgangssignal erhalten.

In einem zweiten Fall übersteigt die Bandbreite der Sensoreingangssignale im Wesentlichen die Bandbreite der Schwingungen, die vom Sensor im Bereich seiner Resonanzfrequenz mit ausreichender Amplitude erkannt und verarbeitet werden können. Dies hat zur Folge, dass das Frequenzspektrum des Sensoreingangssignals derart verändert wird, dass Signale, die innerhalb der Bandbreite liegen, stärkere Gewichtung erhalten, während Sensoreingangssignale mit zunehmender Entfernung vom Bereich der Eigenfrequenz immer schwächer empfangen werden. Dies hat zur Folge, dass dem Sensor eine Filterfunktion zukommt, die einem Bandpass entspricht.

Um aus einem Zylinderraum Motorengeräusche herauszufiltern, wird daher der Bereich, in welchem der Sensor Signale registrieren und verarbeiten kann, in einem bevorzugten Ausführungsbeispiel eine wesentlich kleinere Bandbreite aufweisen, als die Bandbreite der Sensoreingangssignale umfasst. Vorteilhafterweise wird ein Sensor mit einer Bandbreite gewählt, die insbesondere die Frequenzen der Signale umfasst, die charakteristisch für Mikroereignisse sind. Durch den Bandpasseffekt werden somit die meisten anderen Signale, die von anderen, für die Messung irrelevanten Geräuschen im Motorenraum stammen und deren Frequenz entfernt von dem Eigenfrequenzbereich des schwingungsfähigen Kristalls im Sensor angesiedelt ist, im wesentlichen nicht detektiert, beziehungsweise erhalten eine so geringe Gewichtung, dass sie in die Signalauswertung nicht eingehen. Als Beispiel seien Strömungsgeräusche genannt, die durch das Öffnen und Schliessen eines Ventils zur Einspritzung von Brennstoff entstehen. Diese akustischen Signale liegen zumeist im hochfrequenten Bereich. Die Signale unterscheiden sich entweder deutlich von Signalen, die von einem Mikroereignis herrühren und werden daher den akustischen Motorlaufsignalen zugerechnet, die durch den Bandpass herausgefiltert werden. Sollten die Signale hingegen in einem ähnlichen Frequenzbereich liegen, sind sie in einfacher Weise identifizierbar, wenn sie einer Periodizität unterliegen, die nicht mit einem periodischen Signal eines anomalen Ereignisses zusammenfällt. In diesem Fall kann ein Langzeitvergleich der Signalverläufe Klarheit verschaffen, welche Geräusche periodischer Natur zu den Normalbetriebsgeräuschen zählen und welche auf anomale Ereignisse zurückgehen. Wenn ihr Frequenzspektrum dementsprechend weit entfernt von der Resonanzfrequenz des Sensors angesiedelt ist, können sie vom Sensor nicht in Schwingungen umgesetzt werden. Der Sensor weist eine Empfindlichkeit für akustische Signale im Bereich seiner Eigenfrequenz, das heisst, seiner Resonanzfrequenz auf. In einer vorteilhaften Ausgestaltung wurde ein Sensor mit einer Eigenfrequenz von 600 kHz eingesetzt, wobei der Messbereich im Wesentlichen einen Bereich von 400 bis 800 kHz umfasst. Allerdings sind auch ganz andere Bereiche mit verschiedenen Bandbreiten denkbar. Die gewählten Eigenfrequenzen können in Bereichen unter 600 kHz liegen, aber auch den MHz Bereich umfassen, was von der Art der Maschine, deren Grösse, Bauart, der verwendeten Werkstoffe und nicht zuletzt von der Art der interessanten anomalen Ereignisse abhängig ist.

Durch die Filterfunktion des Sensors und/oder einer Auswerteeinheit ist ein Signalverlauf erzeugbar, welcher einen zeitabhängigen Ablauf der Amplituden der empfangenen Frequenzen darstellt. Zu jedem Zeitpunkt wird vom Sensor die Amplitude einer Anzahl von Frequenzen registriert, welche die Geräusche repräsentiert, die zu eben diesem Zeitpunkt im Messraum aufgetreten sind.

Gemäss Anspruch 2 ist die Filtereinrichtung als Bandpass zur Filterung eines vorgebbaren Frequenzbereichs um eine vorgebbare Mittenfrequenz ausgebildet. Der Bandpass umfasst einen elektronischen Bandpass und/oder einen Softwarebandpass. Alternativ dazu oder in Kombination dazu ist der Sensor als mechanischer Bandpass ausgebildet. Wenn der Sensor nur Amplituden von Frequenzen in einem bestimmten Frequenzbereich empfängt, beziehungsweise nur durch diese Amplituden erregbar ist, kommt dem Sensor selbst eine Filterfunktion zu. In diesem Fall wird bevorzugt ein Sensor gewählt, durch den ein zu den Amplituden gehöriger Frequenzbereich verarbeitbar ist, der als relevant für die Erfassung einer zu messenden Störung erachtet wird. Sollten Amplituden von akustischen Signalen in Frequenzbereichen von Interesse sein, die der Sensor nicht verarbeiten kann, aber dennoch in einem relevanten Bereich liegen, besteht die Möglichkeit, zusätzlich einen Sensor zu verwenden, der in einem Frequenzbereich arbeitet und/oder eine andere Bandbreite hat. Sollten aufgrund der begrenzten Bandbreite des Sensors nicht alle relevanten akustischen Signale erfasst werden können, können mehrere Sensoren mit unterschiedlich hohen Eigenfrequenzen und/oder Bandbreiten zum Einsatz kommen. Grundsätzlich wird es durch Hintergrundgeräusche unabhängig von der gewählten Eigenfrequenz des Sensors zu einer Anregung im Bereich des Bandpasses kommen, so beispielsweise durch Strömungsgeräusche insbesondere von Strömungen im turbulenten Bereich, sowie durch Impulsgeräusche, die z.B. durch ein schlagendes Ventil entstehen. Mit zunehmender Frequenz kann sich die Dämpfung der akustischen Wellen erhöhen, daher ist bei der Auswahl einer höheren Mittenfrequenz, das heisst, eines Sensors mit einer höheren Eigenfrequenz oder eines Filters mit einer Hochpassfunktion oder einer Bandpassfunktion im Bereich hochfrequenter Geräusche, vorteilhaft, mehrere Sensoren zu verwenden.

Nach einem weiteren Ausführungsbeispiel ist der Sensor als Hochpass ausgebildet und/oder der vom Sensor detektierte zeitliche Signalverlauf wird in einem elektronischen Hochpass frequenzgefiltert. Alternativ dazu kann der zeitliche Signalverlauf auch mittels eines Datenverarbeitungsprogramms einer einem Hochpass entsprechenden Filterung unterzogen werden.

Nach einem weiteren Ausführungsbeispiel ist der Sensor als Tiefpass ausgebildet und/oder der vom Sensor detektierte zeitliche Signalverlauf wird in einem elektronischen Tiefpass frequenzgefiltert. Alternativ dazu kann der zeitliche Signalverlauf auch mittels eines Datenverarbeitungsprogramms einer einem Tiefpass entsprechenden Filterung unterzogen werden.

Gemäss Anspruch 3 ist ein Standardsignalverlauf, insbesondere ein zyklischer Standardsignalverlauf, in einer Speichereinrichtung speicherbar. Dieser Signalverlauf ist zur Feststellung einer Störung mit dem Standardsignalverlauf vergleichbar.

Eine Amplitude des Signalverlaufs wird als Funktion der Zeit aufgezeichnet und kann derart in einer Speichereinrichtung abgelegt werden. Die Zeit kann insbesondere dann in Perioden unterteilt werden, wenn die Geräusche von zyklisch arbeitenden Vorrichtungen stammen, wie beispielsweise Brennkraftmaschinen. Ein Zyklus und/oder die Periode können dann einem Kolbenhub oder einer Umdrehung einer Kurbelwelle entsprechen. Arbeitet die Vorrichtung im Normalbetrieb, kann der Standardsignalverlauf zum Beispiel aus der Aufzeichnung des zeitlichen Ablaufs der vorgenannten Amplitude der Frequenzspektren, also des zeitlichen Signalverlaufs, ermittelt werden. Der Standardsignalverlauf repräsentiert dann die zeitliche Abfolge der Geräusche, die in der Vorrichtung unter normalen Betriebsbedingungen auftreten. Bei zyklisch arbeitenden Maschinen kann eine derartige zeitliche Abfolge der Geräusche auch aus dem Vergleich einer Serie von Zyklen mit derselben oder einer ähnlichen Abfolge der Geräusche ermittelt werden, indem verschiedene Zyklen überlagert werden und/oder aus den Zyklen rechnerisch eine charakteristische Kenngrösse für ein zu einem bestimmten Zeitpunkt auftretendes Standardgeräusch ermittelt wird. Bei periodischen Abfolgen von Geräuschen können dabei gemittelte Werte des Frequenzspektrums zu einem bestimmten Zeitpunkt, das heisst, insbesondere gemittelte Amplitudenwerte der vorgenannten Amplituden des Frequenzspektrums in den Standardsignalverlauf eingehen. Wenn die Amplituden des Frequenzspektrums in einem schmalen Bereich liegen, ergibt sich durch den Bandpasseffekt im Idealfall bereits ein einziger Wert für die Amplitude.

Dieser Wert für die Amplitude zu einem Zeitpunkt t1 innerhalb der Periode T wird mit dem Wert der Amplitude t1 zu einem Zeitpunkt t1 + T der folgenden Periode verglichen. Der Vergleich wird bis zur Periode (n+1) * T wiederholt, wobei

$$t(n+1) = t(n) + T = t1 + n*T$$

gilt, um einen statistisch signifikanten Mittelwert für das Standardgeräusch zu einem bestimmten Zeitpunkt zu erhalten.

Der zeitliche Verlauf dieser Mittelwerte ergibt dann einen Signalverlauf, der in einer Speichereinrichtung abgelegt werden kann.

Mit diesem Signalverlauf können unmittelbar Abweichungen im Geräuschverhalten der Vorrichtungen bestimmt werden, indem der tatsächlich gemessene Geräuschverlauf mit dem gespeicherten Signalverlauf verglichen wird. Ergibt sich eine Abweichung des gemessenen Signalverlaufs vom gespeicherten oder errechneten Signalverlauf, kann daraus auf eine Störung geschlossen werden sowie anhand des Zeitpunkts des Auftreffens des Geräuschs dessen Herkunft ermittelt werden. Die Ermittlung der Herkunft, also die Bestimmung des Orts des Ursprungs des Signals, ist möglich, wenn zu dem Zeitpunkt, zu welchem das Geräusch ermittelt wurde, bekannt war, an welchem Ort das Geräusch entstanden ist. In einer Brennkraftmaschine liegt ein eindeutiger Zusammenhang zwischen diesem Zeitpunkt und dem Kurbelwinkel vor. Insbesondere ist ein Geräusch in einem Reibungspaar, wie insbesondere von zwei Lageroberflächen oder eines in einem Zylindereinsatz beweglichen Kolbens derart detektierbar, da die Position der miteinander in Reibungskontakt stehenden Bereiche des Gleitpaars bei Rotationsbewegung oder Hin- und Herbewegung zu jedem Zeitpunkt bekannt ist. Der Ort des Ursprungs des Geräuschs lässt sich aus dem Kurbelwinkel ermitteln. Die von dem Sensor detektierte Information über den Reibungszustand der Bereiche des Gleitpaars kann in der Folge insbesondere dazu verwendet werden, um die Schmiermittelmenge zu optimieren.

Das Verfahren gemäss Anspruch 4 zur Detektion eines Signalverlaufs eines Geräuschs in einer Vorrichtung, insbesondere eines Betriebsgeräusches einer Brennkraftmaschine umfasst den Schritt, mittels eines Sensors, der akustisch an die Vorrichtung angekoppelt wird, ein Geräusch zu detektieren, sodass ein vorgegebener Bereich des Frequenzspektrums des Geräuschs mit einer Filtereinrichtung zur Erzeugung des Signalverlaufs herausgefiltert wird. Das Verfahren ist insbesondere mit der erfindungsgemässen Vorrichtung in zumindest einer der vorher beschriebenen Kombinationen durchführbar.

Nach einem vorteilhaften Ausführungsbeispiel gemäss Anspruch 5 wird das Geräusch in einem vorgegebenen Frequenzbereich um eine vorgegebene Mittenfrequenz durch die Filtereinrichtung gefiltert, wobei die Filtereinrichtung insbesondere als Bandpass wirkt. Der Bandpass wird insbesondere durch einen elektronischen Bandpass und/oder einen Softwarebandpass gebildet und/oder der Sensor wird als mechanischer Bandpass ausgebildet.

Nach einem vorteilhaften Ausführungsbeispiel gemäss Anspruch 6 wird ein Standardsignalverlauf, insbesondere ein zyklischer Standardsignalverlauf, erstellt, der in einer Speichereinrichtung gespeichert wird, und in der Folge zur Feststellung einer Störung der Signalverlauf mit dem Standardsignalverlauf verglichen wird, wobei insbesondere ein Zeitpunkt des Auftretens einer Störung durch Vergleich des Standardsignalverlaufs mit dem Signalverlauf detektiert wird.

Nach einem vorteilhaften Ausführungsbeispiel gemäss Anspruch 7 wird von der Filtereinrichtung in einem ersten Zyklus ein erster Signalverlauf als Standardsignalverlauf detektiert und in einem zweiten Zyklus ein zweiter Signalverlauf detektiert, und der erste Zyklus mit dem zweiten Zyklus verglichen. Dieser Vergleich kann beliebig oft wiederholt werden.

Das Verfahren nach Anspruch 8 umfasst die Unterteilung des Signalverlaufs zur Datenreduktion in vorgegebene Abschnitte, sodass der Signalverlauf in einem vorgegebenen Abschnitt durch eine charakteristische Grösse ersetzt wird. Der Signalverlauf des Geräuschs in Abhängigkeit von der Zeit erfasst somit die Betriebsgeräusche, die während der Messperiode vom Sensor detektiert wurden. Jeder Punkt dieser Kurve entspricht der zum Zeitpunkt t empfangenen oben beschriebenen charakteristischen Amplitude des Geräuschs. Im nächsten Schritt wird im Rahmen einer Datenreduktion eine Selektion von charakteristischen Punkten vorgenommen, sodass die Betrachtung auf diese charakteristischen Punkte beschränkt wird. Nach einem bevorzugten Ausführungsbeispiel wird ein Schwellwert gewählt, der dazu dient, Geräusche mit Amplituden unterhalb des Schwellwerts auszuklammern, die als Hintergrundrauschen für eine Auswertung nicht von Bedeutung sind. Alle Amplitudenwerte über dem Schwellwert stellen Werte für potentiell relevante Signale dar. Vorteilhafterweise kommt eine der folgenden Methoden zum Einsatz, um die auszuwertende Datenmenge zu reduzieren. In einem ersten Ausführungsbeispiel werden die Spitzenwerte, welche über dem Schwellwert liegen, erfasst, aufgezeichnet und digitalisiert. Für diese Spitzenwerte kann mittels Regression eine Näherungsfunktion gefunden werden oder eine Einhüllende (Enveloppe) rechnerisch ermittelt werden. Grundsätzlich besteht auch die Möglichkeit, sich auf den höchsten Spitzenwert zu beschränken. Weiters ist es möglich, die Periode, das heisst, insbesondere die Zeitdauer für eine vollständige Umdrehung der Kurbelwelle, in mehrere Zeitsegmente zu unterteilen, wobei insbesondere nur das Segmentmaximum betrachtet werden soll, was zu einer weiteren Datenreduktion führen kann. Die Ermittlung weiterer Maxima in einem Segment kann von Vorteil sein, insbesondere bei der Wahl grösserer Segmentbreiten. Anstelle der Verwendung Segmentmaxima können die Funktionswerte im Segment auch durch eine Gaussverteilung oder eine andere statistische Verteilung beschrieben werden. Mit zumindest einem dieser Verfahren ist eine für den Normalbetrieb der Brennkraftmaschine charakteristische Kurve ermittelbar. Durch Ermittlung der maximalen Amplitude sind isolierte Mikroereignisse erkennbar, wie beispielsweise die Entstehung eines Mikrorisses. In diesem Fall werden Spitzenwerte zu Zeitpunkten, das heisst, insbesondere zu bestimmten Kurbelwinkeln erkennbar, die deutlich vom Funktionsverlauf abweichen, der dem Normalbetrieb der Vorrichtung entspricht. Die maximalen Amplituden aller Ereignisse in einem Segment werden über dem Kurbelwinkel, das heisst, der Periodendauer eines vollständigen Kolbenhubs aufgetragen. Je nach Position des Sensors im Kolbenraum ergibt sich ein charakteristischer Verlauf der Amplitudenhöhe. Für eine Periode und/oder den Zyklus, insbesondere der Zeitdauer für die Umdrehung einer Kurbelwelle, hat sich eine Unterteilung in mehrere Segmente als vorteilhaft erwiesen. Wenn nur das absolute Segmentmaximum in die Auswertung eingehen soll, beträgt die Segmentbreite vorteilhafterweise zwischen 0,2 und 1 ° Kurbelwinkel.

Nach einem vorteilhaften Ausführungsbeispiel gemäss Anspruch 9 wird ferner durch Auswertung der von einer Störung empfangenen Signale eine Lokalisierung der Störung ermöglicht. Dabei wird insbesondere eine zyklisch arbeitende Vorrichtung, wie eine Brennkraftmaschine vorgesehen, bei welcher ein anormales Ereignis im Signalverlauf einem Zeitpunkt im Zyklus und/oder der Periode der zyklisch arbeitenden Vorrichtung, insbesondere einem Kurbelwinkel, zugeordnet wird, und der Ort des Ursprungs des anomalen Ereignisses festgestellt wird. Ein nach einem der vorgehend beschriebenen Verfahren zur Datenreduktion resultierender charakteristischer Wert für die oben beschriebene charakteristische Amplitude wird eindeutig einem Zeitpunkt zugeordnet. In einer zyklisch arbeitenden Vorrichtung entspricht der Zeitpunkt somit genau einem Ort in diesem Zyklus, im Fall einer Brennkraftmaschine insbesondere einem Kurbelwinkel. Aus dem Zeitpunkt des Auftreffens des Signals am Sensor und dem Kurbelwinkel kann daher der Ort des Ursprungs des Signals genau ermittelt werden, wobei davon ausgegangen wird, dass das Signal vom Gleitpaar Kolben beziehungsweise Kolbenring zum Zylindereinsatz herrührt. Ist das Signal auf ein Mikroereignais, insbesondere einen Mikroriss zurückzuführen, wird dieser durch die Wand des Kolbens und/oder des Zylindereinsatzes zum Sensor geleitet. Bei einer Schallgeschwindigkeit von circa 5000 m/s in einem metallischen Werkstoff, wie insbesondere Stahl, ergibt sich durch die Laufzeit des Signals eine im Vergleich zur Laufgeschwindigkeit der Maschine keine für die Messung relevante Verzögerung, sodass die Annahme, dass das Signal den Sensor unmittelbar erreicht, zutrifft. Wenn eine Unterteilung des Kurbelwinkels von zwischen 0,2 und 1° vorgenommen wird, entspricht dieser Bereich, bei einer Umdrehungszahl der Brennkraftmaschine zwischen 100 und 200 U/min, einer Zeit $\Delta t$ von $10^{-3}$ bis $10^{-4}$ s. Wenn ein Kolbenhub im Bereich zwischen 1 und 5 m angenommen wird, durchläuft das Signal die maximale Wegstrecke ebenfalls in $10^{-3}$ bis $10^{-4}$ s, was nichts anderes bedeutet, als dass das Signal, das im Zylinderraum entsteht, innerhalb des Zeitfensters, welches der gewählten Segmentbreite entspricht, den Sensor erreichen wird.

Nach einem vorteilhaften Ausführungsbeispiel gemäss Anspruch 10 sind zumindest zwei Sensoren vorgesehen, und der Ort des Ursprungs des anomalen Ereignisses wird aus der Laufzeitdifferenz ermittelt.

Nach einem vorteilhaften Ausführungsvariante des Verfahrens nach Anspruch 11 werden Anomalien im Signalverlauf auf Mikroereignisse, insbesondere Mikrorisse zurückgeführt. Als Beispiel hierfür sei das Warmfressen genannt, wobei es zur Bildung von Riefen und Fressmarken im Bereich hoher Gleitgeschwindigkeiten infolge einer durch den Werkstoff des Gleitpaars und durch das Schmiermittel bedingten Grenztemperatur insbesondere in zyklisch arbeitenden Brennkraftmaschinen kommt. Die Ausbildung der Riefen und Fressmarken erfolgt allmählich, sodass sie im Rahmen einer Langzeitanalyse durch die allmähliche Veränderung der Lage und/oder der Höhe der daraus resultierenden Spitzenwerte im Signalverlauf ermittelbar ist.

Die Erfindung betrifft weiter eine Brennkraftmaschine, insbesondere einen Grossdieselmotor nach einem der Ansprüche 1 -3 umfassend einen Zylinder mit einem hin- und herbewegbaren Kolben, welche insbesondere zusammen mit einem Kolbenring ein Gleitpaar ausbilden, betrieben nach dem Verfahren nach einem der Ansprüche 4-11.

Der abhängige Anspruch 13 betrifft eine vorteilhafte Ausführungsform der erfindungsgemässen Vorrichtung zur Kontrolle der Schmiermittelmenge sowie ein Verfahren zur Ermittlung des Ursprungs der akustischen Emissionen zur Bestimmung der optimalen Schmiermittelmenge und/oder des Zustands des Kolbenrings und/ oder der Oberfläche eines Gleitpaars.

Es ist eine weitere Aufgabe der Erfindung, Mittel vorzusehen, um den momentanen Zustand der Reibung des Gleitpaars Kolben bzw. Kolbenring /Zylindereinsatz festzustellen sowie die optimale Schmiermittelmenge aufgrund der Analyse des momentanen Zustands einzustellen.

Die Lösung der Aufgabe erfolgt durch Einstellung der optimalen Schmiermittelmenge aufgrund akustischer Messung der auf der Zylinderoberfläche entstehenden Reibgeräusche und Auswertung der Signale in einer Auswerteinheit. Diese Aufgabe ist mit der im Anspruch 13 definierten Brennkraftmaschine lösbar. Insbesondere handelt es sich um eine Brennkraftmaschine, bei welcher ein anomales Ereignis aufgrund der Gleitbewegung des Kolbens im Zylinder detektierbar ist, welches anomale Ereignis insbesondere charakteristisch für das Reibungsverhalten des Gleitpaars ist, und ein Mittel zur Regelung oder Steuerung der Schmiermittelzufuhr in Abhängigkeit vom detektierten Reibungsverhalten vorgesehen ist. Nebst der Detektierung eines anomalen Ereignisses, kann mittels des erfindungsgemässen Verfahrens unter anderem die Schmiermittelmenge, sowie die lokale Dicke des Schmierfilms ermittelt werden, wobei das Detektierungsmittel, wie hier der Sensor, den Signalverlauf des akustischen Signals erfasst. Von dem Auswertemittel wird die vorgenannte Amplitude des Signals analysiert, sowie auf eine Zeitachse aufgetragen.

Somit ist es möglich, durch den Einsatz von einem oder mehreren Körperschallsensoren, den Körperschall der Hubkolbenbrennkraftmaschine zu detektieren und durch geeignete Auswertung, unter anderem unter zusätzlicher Berücksichtigung von Laufzeiteffekten, die zum Beispiel zwischen verschiedenen Sensoren messbar sein können, entsprechende Schallquellen auf der Lauffläche einer Zylinderwand nach einem der vorgenannten Ausführungsbeispiele exakt zu lokalisieren und Rückschlüsse auf eine charakteristische Kenngrösse des Schmiermittelfilms, insbesondere auf die Dicke des Schmiermittelfilms zu ziehen, so dass ein Zustandsparameter, z.B. die Dicke des Schmiermittelfilms entsprechend lokal optimiert werden kann.

Wenn nur ein einziger Sensor zum Einsatz kommen soll, können weitere Betriebsparameter, wie beispielsweise der Kurbelwinkel oder ein periodisch sich wiederholendes Signal zur Identifikation der Herkunft des auf einer Störung beruhenden zu messenden Störsignals herangezogen werden. Ein Beispiel für ein derartiges bekanntes Geräusch ist das Öffnen und Schliessen eines Einlassventils, das zudem zeitlich genau festgelegt ist und einer periodischen Wiederholung unterliegt.

In einem bevorzugten Ausführungsbeispiel wird ein Sensor verwendet, der in der sich in der Nähe des oberen Totpunkts des Kolbens befindet. In diesem Fall ist der Einbau des Sensors in die Brennkraftmaschine einfach zu realisieren. Jedes Ereignis, das einen Mikroriss in der Brennkammer repräsentiert, weist eine wesentlich höhere Amplitude auf, als ein Mikroereignis im Bereich der Kurbelwelle, dadurch bedingt, dass das akustische Signal beim Durchgang durch verschiedene Materialien, durch Reflexionen an der Wand des Zylindereinsatzes sowie durch die Laufstrecke selbst einer Dämpfung unterliegt. Folglich ist der Einfluss der Position des einzelnen Sensors auf das Messergebnis nicht vernachlässigbar, sie ist demnach also nach der Erwartung der relevanten Ereignisse geeignet zu wählen. Die Wahl der Position des Sensors unterliegt im Allgemeinen wenig baulichen Einschränkungen, da der Sensor an beliebigen Ort befestigt werden kann. Somit ergibt sich als weiterer Vorteil, dass derartige Sensoren auch bei bereits im Betrieb befindlichen Kolbenmaschinen einfach nachrüstbar sind.

Nachfolgend wird die Erfindung anhand der Zeichnungen erläutert. Es zeigen:

Fig. 1     ein bevorzugtes Ausführungsbeispiel für die Detektion und die Auswertung eines Signals in einem Auswertemittel,

Fig. 2     eine mögliche Signalverarbeitung des ausgewerteten Signalverlaufs,

Fig. 3     eine weitere mögliche Signalverarbeitung des ausgewerteten Signalverlaufs,

Fig. 4     eine Zylinder/Kolbeneinheit mit einer schematischen Darstellung der Kontrollvorrichtung,

Fig. 5     einen Längsschnitt durch einen Kolben, der Kolbenringe trägt und der innerhalb eines Zylindereinsatzes angeordnet ist.

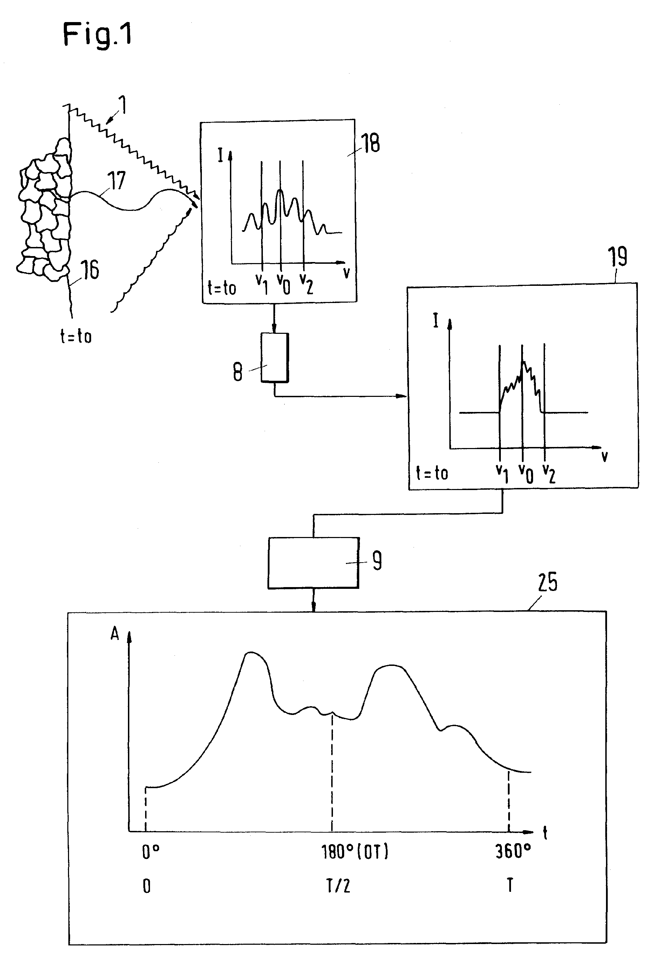

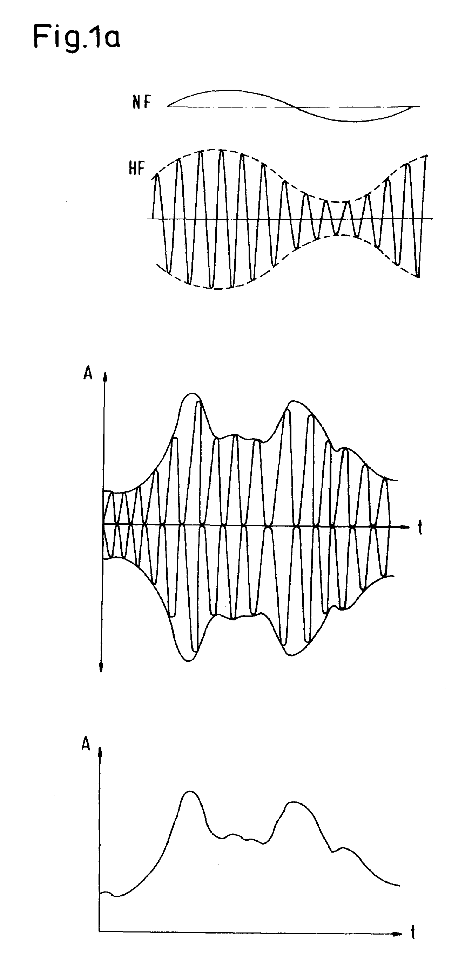

In Fig. 1 wird der Signalweg von der Signalquelle bis zum Ausgangssignal des Auswertemittels 9 schematisch dargestellt. Ein Signal entsteht hier durch ein Mikroereignis, wie ein Mikroriss im Gefüge eines Werkstücks 16, welches Teil der Vorrichtung 1 ist. Dieses Werkstück 16 ist insbesondere Teil einer Brennkraftmaschine, wie ein Kolben, ein Zylindereinsatz, ein Teil eines Kolbenrings oder ein anderes durch Temperatur und/oder mechanische und/oder chemische Beanspruchungsarten belastetes Bauteil. Das Signal 17 ist hier als Wellenlinie dargestellt, es handelt sich um eine Schallwelle charakteristischer Frequenz. Von der Vorrichtung 1 werden zum Zeitpunkt $t_0$ nicht nur das Signal 17, sondern eine Fülle weiterer Signale ausgesendet, von welchen zwei exemplarisch als Wellenlinie geringerer Wellenlänge dargestellt sind. Diese Darstellung ist nicht als Begrenzung auf den Wellenlängenbereich dieser Signale auszulegen, vielmehr können auch Signale grösserer Wellenlänge von der Vorrichtung 1 ausgesendet werden. Eine Momentaufnahme der Frequenzen aller akustischen Signale der Vorrichtung 1 ist schematisch in der Grafik 18 dargestellt. Es ergibt sich somit ein Frequenzspektrum, welches um eine Mittenfrequenz $v_0$ angeordnet ist. Eine Maximalfrequenz $v_2$, sowie eine Minimalfrequenz $v_1$ sind gleichfalls eingetragen, deren Bedeutung im Folgenden erläutert wird. In dem dargestellten Fall verarbeitet der Sensor 8 aber das gesamte Frequenzspektrum, sondern "hört" nur den Bereich des Frequenzspektrums, der zwischen der Maximalfrequenz $v_2$ und der Minimalfrequenz $v_1$ angesiedelt ist.

Die Grafik 19 zeigt schematisch das Frequenzspektrum des vom Sensor ausgegebenen elektrischen Signals der vom Sensor registrierten Geräusche. Die Mittenfrequenz $v_0$ liegt dabei im Bereich des zu erwartenden Signals 17, das von einem relevanten Mikroereignis ausgesendet wird. Das Ausgangssignal des Sensors 8 wird in ein Auswertemittel 9 eingespeist. In diesem Auswertemittel 9 werden die Amplituden der Frequenzspektren oder eine charakteristische Grösse derselben, wie die maximale Amplitude oder ein Mittelwert oder eine andere mittels eines statistischen Verfahrens ermittelte Kenngrösse in Abhängigkeit von der Zeit t aufgetragen. Grafik 25 zeigt schematisch eine vom Auswertemittel 9 ermittelte Funktion. Die Abszisse ist die Zeitachse, schematisch ist eine Periodendauer T für einen Signalverlauf dargestellt, der einer Periodizität unterliegen kann. In einer Brennkraftmaschine kann der Periodendauer insbesondere einem vollständigen Verbrennungszyklus entsprechen. In diesem Fall kann auf der Abszisse auch der Kurbelwinkel aufgetragen werden. Auf der Ordinate ist der Signalverlauf aufgetragen.

In Fig. 1a ist die Ermittlung eines Signalverlaufs eines amplitudenmodulierten Sensorausgangssignals dargestellt. Zur schematischen Erläuterung der Methode ist im oberen Teil der Fig. 1a ein mit einer Niederfrequenz (NF) amplitudenmoduliertes Hochfrequenzsignal (HF) dargestellt, wie es beispielsweise als Eingangssignal von einem Mittelwellenradio empfangen wird. Die niederfrequente Signalinformation NF erhält man dann durch Gleichrichtung und Tiefpassfilterung des amplitudenmodulierten HF - Signals wieder zurück, das dann als das ursprüngliche Tonsignal über den Lautsprecher des Radios wieder ausgegeben werden kann. Völlig analog zu diesem aus der Radiotechnik bekannten Verfahren wird in einem Ausführungsbeispiel des erfindungsgemässen Verfahrens aus dem amplitudenmodulierten Geräuschverlauf des Motors aus dem bandpassgefilterten Signal, das eine Frequenzverteilung um die Mittenfrequenz des Sensors aufweist, durch Gleichrichtung und Demodulation der Signalverlauf gewonnen. Bei dem in Fig. 1a gezeigten Beispiel wird ein Sensor mit einer Mittenfrequenz von 600 kHz und einer Bandbreite von 200 kHz verwendet, der als Bandpass ausgebildet ist. Das elektrische Signal, das vom Sensor geliefert wird, ist ein amplitudenmoduliertes Signal der Geräusche im vorgenannten Frequenzbereich, der im Wesentlichen durch Mittenfrequenz und Bandbreite des Sensors definiert ist. Wie bereits oben erläutert, ist ähnlich wie bei einem Mittelwellensender die Information in der Amplitudenmodulation der Trägerfrequenz kodiert. Daher kann man, genau wie bei einem amplitudenmodulierten Mittelwellensignal, an die relevante Information, nämlich den zeitlichen Verlauf der Einhüllenden gelangen, indem der hochfrequente Anteil durch einen geeigneten Tiefpass herausgefiltert wird, und/oder durch eine Gleichrichtung nur der entsprechende Teil des Signals weiterverarbeitet wird.

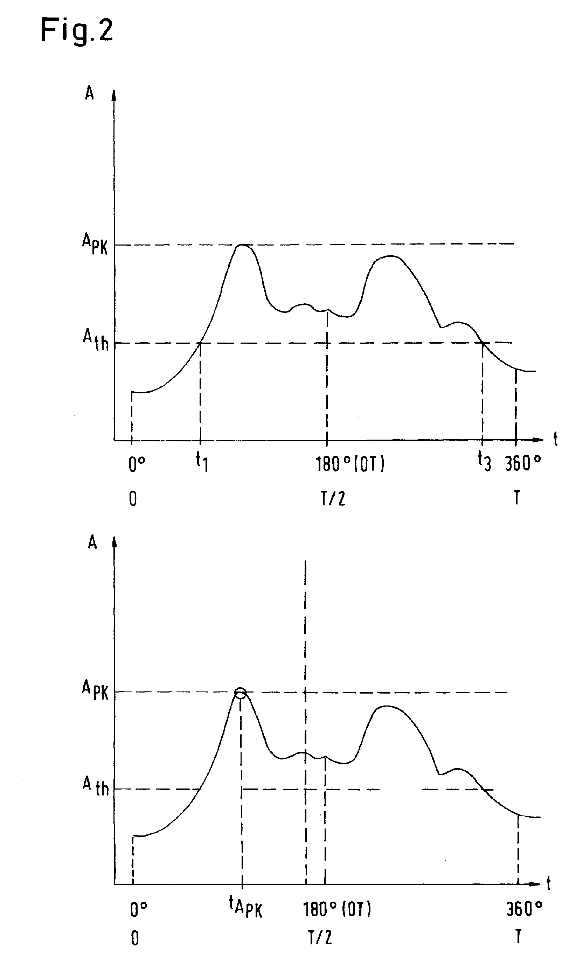

Diese zeitliche Abfolge der Spannungsamplituden ist in Fig. 2 noch einmal dargestellt. Jeder Punkt auf der Kurve entspricht dem Signalverlauf, der in ein elektrisches Spannungssignal umgewandelt wurde. Der Schwellwert Ath für die Amplitude markiert die Grenze des Signalverlaufs, unterhalb dessen nur nicht relevante Hintergrundgeräusche registrierbar sind. Zu irgendeinem Zeitpunkt $t_1$ wird der Schwellwert Ath überschritten, alle Werte darüber stellen potentiell relevante Signale in dem Frequenzbereich dar, der der Auslösung eines Mikroereignisses entspricht. Will man den gesamten Abschnitt des Signalverlaufs von $t_1$ bis $t_3$ auswerten, muss jede einzelne charakteristische Amplitude betrachtet werden, was einen beträchtlichen Datenumfang bedeutet. Aus diesem Grund erfolgt eine Signalkonditionierung, welche einer Datenreduktion dient. Wenn davon ausgegangen werden kann, dass relevante Signale nur zwischen dem Schwellwert $A_{th}$ und dem Maximalwert $A_{pk}$ auftreten, haben sich mehrere Näherungsverfahren als geeignet erwiesen. Zum einen liefert der maximale Amplitudenwert $A_{pk}$ selbst eine genaue Aussage darüber, wann das Signal 17 in der Vorrichtung 1 entstanden ist. Der Ort des Ursprungs des Signals 17 ist somit über den Zeitpunkt des Eintreffens auf dem Sensor bekannt.

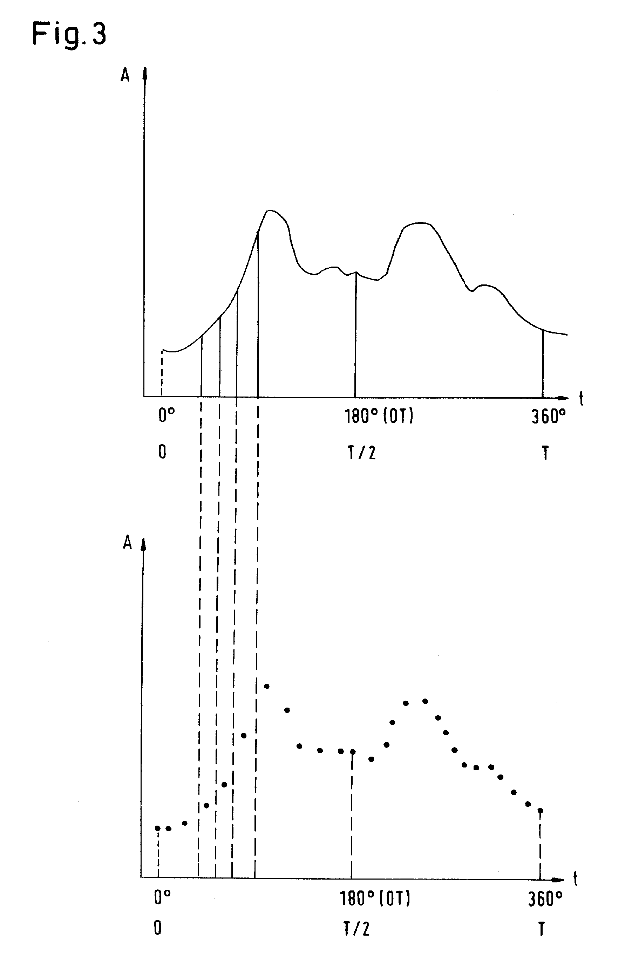

Eine weitere Möglichkeit ist in Fig. 3 dargestellt. In diesem Fall wird der Funktionsverlauf in einzelne Segmente unterteilt. Für jedes dieser Segmente kann ein charakteristischer Punkt nach einem der vorhin beschriebenen Methoden zur Datenreduktion oder eine Verteilung ermittelt werden.

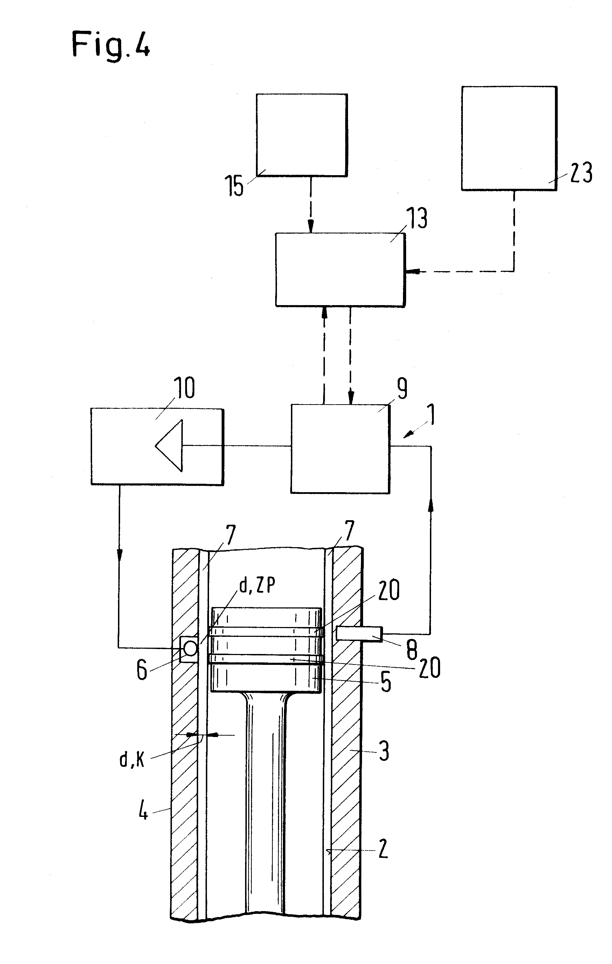

In Fig. 4 ist schematisch eine erfindungsgemässe Vorrichtung 1 dargestellt. Die Vorrichtung umfasst einen Zylindereinsatz 4 mit einer Zylinderwand 3, die einen Brennraum einer Hubkolbenbrennkraftmaschine in an sich bekannter Weise in Umfangsrichtung begrenzt. Innerhalb des Zylindereinsatzes 4 ist ein Kolben 5 vorgesehen, der bezüglich einer Längsachse des Zylindereinsatzes 4 in axialer Richtung entlang einer Lauffläche 2 der Zylinderwand 3 hin- und herbewegbar angeordnet ist. In der Zylinderwand 3 ist mindestens eine Schmiermitteldüse 6 angeordnet, mit welcher ein Schmiermittelfilm 7 auf die Lauffläche 2 der Zylinderwand 3 im Betriebszustand aufgebracht wird. Mittels eines Sensors 8 wird eine Aufzeichnung der akustischen Signale im Motorraum vorgenommen. Der Sensor 8 ist dazu mit einem Auswertemittel 9 verbunden, welches die Signale von Sensor 8 empfängt und verarbeitet. In dieser Auswertemittel erfolgt die Signalauswertung und die Signalkonditionierung, worunter die Umwandlung einer physikalischen Größe wie beispielsweise Licht, Druck, Widerstand oder in diesem Fall das Spannungssignal des Sensors 8 in eine, dem Messwert analoge Spannung, die durch ein Messgerät erfasst und angezeigt werden kann, verstanden werden soll.

An das Auswertemittel 9 ist ein Regelmittel 10 angeschlossen, und eine Schmiermitteldüse 6 mit dem Regelmittel 10 signalverbunden, so dass mit Hilfe eines Signals des Sensors 8 die Schmiermitteldüse 6 derart angesteuert wird, dass ein Zustandsparameter ZP des Schmiermittelfilms 7, im vorliegenden Beispiel die Dicke d des Schmiermittelfilms 7 auf der Lauffläche 2 der Zylinderwand 3 optimiert wird. Dabei ist in Fig. 4 exemplarisch jeweils nur eine Schmiermitteldüse 6 und nur ein einziger Sensor dargestellt. Es versteht sich, dass jeder Zylindereinsatz 4 der Hubkolbenbrennkraftmaschine jeweils mehrere gleichartige oder verschiedenartige Sensoren 8 und mehrere Schmiermitteldüsen 6 aufweisen können, die geeignet an verschiedenen Stellen in und / oder an der Zylinderwand 3 angebracht sein können. Der Sensor kann auch im (nicht dargestellten) Zylinderdeckel und/oder am Kolben und/oder Kolbenring angebracht sein und/oder beweglich mit dem Kolben verbunden sein. Wesentlich ist, dass eine oder mehrere der charakteristischen Kenngrössen, unter anderem natürlich auch die Dicke des Schmiermittelfilms zwischen den Gegenlaufpartnern im Zylinder der Brennkraftmaschine, also z.B. zwischen Lauffläche und/oder Kolben 5 und/oder Kolbenring 20 entsprechende Auswirkungen auf die aufgrund der gegenseitigen Reibungseffekte entstehenden akustischen Emissionen und Schallwellen hat.

Das Auswertemittel 9 umfasst dabei bevorzugt eine hier nicht explizit dargestellte Datenverarbeitungsanlage, mit welcher die Signale des Sensors 8 ausgewertet werden können, so dass die Schmiermitteldüse 6 von den Regelmitteln 10 derart angesteuert wird, dass der Zustandsparameter ZP, also hier die Dicke d des Schmiermittelfilms 7 auf der Zylinderwand 3 optimiert wird.

Mit einem zweiten, nicht dargestellten Sensor, der zum ersten Sensor 8, diametral gegenüber, oberhalb und/oder unterhalb des ersten Sensors 8 angeordnet ist, lässt sich eine Aussage darüber treffen, ob Abweichungen vom Normalzustand bei der örtlichen Verbreitung des Schalls auftreten. Über eine sogenannte Kreuzkorrelation werden die Signale der beiden Sensoren miteinander verglichen. Stellt sich bei Überlagerung beider Signale heraus, dass deutliche Spitzenwerte auftreten, entsprechen diese in aller Regel einer Geräuschverteilung, welche auf eine Anomalie in der Versorgung mit Schmiermittel, in einem Übergang von Gleitreibung bei hydrodynamischer Schmierung zu Mischreibung oder umgekehrt zurückzuführen sein kann oder auch einem isolierten Mikroereignis, wie der Ausbildung eines Mikrorisses zuzuordnen sein kann.

In einem weiteren Ausführungsbeispiel wird anstatt des zweiten Sensors ein anderer, für den Kolbenweg charakteristischer Parameter gewählt. Dabei wird vorteilhafterweise der Kurbelwinkel oder ein periodisches Signal, wie beispielsweise das Geräusch des Öffnens oder Schliessens eines Einlass- oder Auslassventils gewählt. Der Sensor 8 empfängt in Abhängigkeit vom Kurbelwinkel Signale, die von Motorgeräuschen herrühren. In diesem Fall wird der Signalverlauf, der vom Sensor 8 aufgezeichnet worden ist, während des normalen Betriebs des Kolbens in einer Speichereinheit 13 gespeichert. Der Signalverlauf wird in das Auswertemittel 9 eingelesen, sodass anhand der Position des Sensors im Messraum und des Kurbelwinkels der Signalverlauf derart auswertbar ist, dass die Oberflächenkoordinaten der Störung ermittelbar sind, wodurch der Ort der Störung feststellbar ist. Das Auswertemittel 9 ist mit einer Speichereinheit 13 über zumindest eine Datenverbindung verbunden, sodass anhand der Referenzdaten, die in der Speichereinheit 13 abgelegt sind, in einer Vergleichseinheit 14 die eingehenden Signale mit den Referenzsignalen vergleichbar sind. Aufgrund dieses Vergleichs sind Anomalien des Schallmusters detektierbar, die als Störung lokalisierbar sind. Die Referenzdaten können auch über eine Kalibriereinheit 15 in die Speichereinheit eingelesen worden sein oder aus einer im Rechner 23 simulierten Geräuschverteilung stammen.

**Patentansprüche**

1. Einrichtung zur Detektion eines Signalverlaufs eines Geräuschs in einer Vorrichtung, insbesondere eines Betriebsgeräusches einer Brennkraftmaschine, umfassend einen Sensor, welcher zur Detektion des Geräusches akustisch an die Vorrichtung angekoppelt ist, **dadurch gekennzeichnet, dass** eine Filtereinrichtung vorgesehen ist, mit welcher ein vorgebbarer Bereich des Frequenzspektrums des Geräuschs zur Erzeugung des Signalverlaufs herausfilterbar ist.

2. Einrichtung nach Anspruch 1 wobei die Filtereinrichtung als Bandpass zur Filterung eines vorgebbaren Frequenzbereichs um eine vorgebbare Mittenfrequenz ausgebildet ist, und der Bandpass einen elektronischen Bandpass und/oder einen Softwarebandpass umfasst und/oder der Sensor als mechanischer Bandpass ausgebildet ist.

3.  Einrichtung nach einem der Ansprüche 1 oder 2, wobei ein ermittelbarer Standardsignalverlauf, insbesondere ein zyklischer Standardsignalverlauf, in einer Speichereinrichtung speicherbar ist, und der Signalverlauf zur Feststellung einer Störung mit dem Standardsignalverlauf vergleichbar ist.

4.  Verfahren zur Detektion eines Signalverlaufs eines Geräuschs in einer Vorrichtung, insbesondere eines Betriebsgeräusches einer Brennkraftmaschine, wobei mittels eines Sensors, der akustisch an die Vorrichtung angekoppelt wird, ein Geräusch detektiert wird, **dadurch gekennzeichnet, dass** ein vorgegebener Bereich des Frequenzspektrums des Geräuschs mit einer Filtereinrichtung zur Erzeugung des Signalverlaufs herausgefiltert wird.

5.  Verfahren nach Anspruch 4, wobei das Geräusch in einem vorgegebenen Frequenzbereich um eine vorgegebene Mittenfrequenz durch die Filtereinrichtung gefiltert wird, wobei die Filtereinrichtung insbesondere als Bandpass wirkt, und der Bandpass insbesondere durch einen elektronischen Bandpass und/oder einen Softwarebandpass gebildet wird und/oder der Sensor als mechanischer Bandpass ausgebildet wird.

6.  Verfahren nach einem der Ansprüche 4 oder 5, wobei ein Standardsignalverlauf, insbesondere ein zyklischer Standardsignalverlauf, erstellt wird, der in einer Speichereinrichtung gespeichert wird, und in der Folge zur Feststellung einer Störung der Signalverlauf mit dem Standardsignalverlauf verglichen wird, wobei insbesondere ein Zeitpunkt des Auftretens einer Störung durch Vergleich des Standardsignalverlaufs mit dem Signalverlauf detektiert wird.

7.  Verfahren nach einem der Ansprüche 4 bis 6, wobei von der Filtereinrichtung in einem ersten Zyklus ein erster Signalverlauf als Standardsignalverlauf detektiert wird und in einem zweiten Zyklus ein zweiter Signalverlauf detektiert wird, und der erste Zyklus mit dem zweiten Zyklus verglichen wird.

8.  Verfahren nach einem der Ansprüche 4 bis 7, wobei der Signalverlauf zur Datenreduktion in vorgegebene Abschnitte unterteilt wird, und der Signalverlauf in einem vorgegebenen Abschnitt durch eine charakteristische Grösse ersetzt wird.

9.  Verfahren nach einem der Ansprüche 4 bis 8, wobei eine zyklisch arbeitende Vorrichtung, insbesondere eine Brennkraftmaschine vorgesehen wird, bei welcher ein anormales Ereignis im Signalverlauf einem Zeitpunkt im Zyklus der zyklisch arbeitenden Vorrichtung, insbesondere einem Kurbelwinkel, zugeordnet wird, und der Ort des Ursprungs des anomalen Ereignisses festgestellt wird.

10. Verfahren nach einem der Ansprüche 4 bis 9, wobei zumindest zwei Sensoren vorgesehen sind, und der Ort des Ursprungs des anomalen Ereignisses aus einer Laufzeitdifferenz ermittelt wird.

11. Verfahren nach einem der Ansprüche 4 bis 10, wobei eine Anomalie im Signalverlauf auf ein Mikroereignis, insbesondere einen Mikroriss zurückgeführt wird.

12. Brennkraftmaschine, insbesondere Grossdieselmotor nach einem der Ansprüche 1 -3 umfassend einen Zylinder mit einem hin- und herbewegbaren Kolben, welche insbesondere zusammen mit einem Kolbenring ein Gleitpaar ausbilden, betrieben nach dem Verfahren nach einem der Ansprüche 4-11.

13. Brennkraftmaschine nach Anspruch 12, wobei ein anomales Ereignis aufgrund der Gleitbewegung des Kolbens im Zylinder detektierbar ist, welches anomale Ereignis insbesondere charakteristisch für das Reibungsverhalten des Gleitpaars ist, und ein Mittel zur Regelung und/oder Steuerung der Schmiermittelzufuhr in Abhängigkeit vom detektierten Reibungsverhalten vorgesehen ist.

# Fig.1

# Fig.1a

NF

HF

A

t

A

t

# Fig.2

# Fig.3

# Fig.4

**Europäisches Patentamt**

**EUROPÄISCHER RECHERCHENBERICHT**

Nummer der Anmeldung

EP 07 10 3330

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2005/031137 A (SIEMENS AKTIENGESELLSCHAFT; BOEHNIG, RALF; HIRN, RAINER; SCHLEGL, THOM) 7. April 2005 (2005-04-07) | 1-7,12 | INV. F02D41/22 F02D35/02 G01M13/00 |
| A | * Zusammenfassung * * Seite 1, Zeilen 6-19 * * Seite 2, Zeile 34 - Seite 4, Zeile 6 * * Seite 5, Zeile 12 - Zeile 31 * * Seite 6, Zeile 9 - Zeile 24 * * Abbildungen 1,8 * | 8-11 | G01N29/14 G01H1/00 |
| X | DE 101 44 076 A1 (DAIMLERCHRYSLER AG) 27. März 2003 (2003-03-27) | 1-6,12 | |
| A | * Zusammenfassung * * Absätze [0001], [0029] * * Absätze [0034] - [0038] * * Abbildungen 1,2 * | 7-11 | |
| X | DE 195 36 110 A1 (ROBERT BOSCH GMBH, 70469 STUTTGART, DE; ROBERT BOSCH GMBH) 3. April 1997 (1997-04-03) | 1,2,4,5, 12 | |
| A | * Zusammenfassung * <br> * Spalte 1, Zeile 25 - Spalte 2, Zeile 62 * <br> * Abbildung 2 * | 3,6-11, 13 | RECHERCHIERTE SACHGEBIETE (IPC) <br> F02D F02B G01M G01N G01H |
| X | US 5 001 931 A (NISHIMOTO ET AL) 26. März 1991 (1991-03-26) | 1-8,11 | |
| Y | * Zusammenfassung * <br> * Spalte 1, Zeile 11 - Spalte 3, Zeile 25 * | 12 | |
| Y | DE 39 07 419 A1 (INGENIEURGESELLSCHAFT FUER BEHAELTERBAU, MOTORENBAU UND ALLGEMEINER MA) 13. September 1990 (1990-09-13) * das ganze Dokument * | 12 | |

-/--

Der vorliegende Recherchenbericht wurde für alle Patentansprüche erstellt

| Recherchenort | Abschlußdatum der Recherche | Prüfer |
|---|---|---|
| München | 29. Juni 2007 | Wettemann, Mark |

EPO FORM 1503 03.82 (P04C03)

**Europäisches
Patentamt**

**EUROPÄISCHER RECHERCHENBERICHT**

Nummer der Anmeldung

EP 07 10 3330

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br><br>Y | EP 1 284 414 A (SIEMENS AKTIENGESELLSCHAFT) 19. Februar 2003 (2003-02-19) * Zusammenfassung * * Absätze [0004] - [0008] * * Absätze [1113], [0015], [0016] * ----- | 1,3,4, 6-8<br><br><br>12 | |

|  |
|---|
| RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 29. Juni 2007 | Wettemann, Mark |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.............................................................................
& : Mitglied der gleichen Patentfamilie, übereinstimmendes
    Dokument

EPO FORM 1503 03.82 (P04C03)

# EP 1 840 361 A1

**ANHANG ZUM EUROPÄISCHEN RECHERCHENBERICHT**
**ÜBER DIE EUROPÄISCHE PATENTANMELDUNG NR.**                    EP 07 10 3330

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-06-2007

| Im Recherchenbericht angeführtes Patentdokument | Datum der Veröffentlichung | Mitglied(er) der Patentfamilie | | Datum der Veröffentlichung |
|---|---|---|---|---|
| WO 2005031137 A | 07-04-2005 | DE | 10343069 A1 | 28-04-2005 |
| | | EP | 1664508 A1 | 07-06-2006 |
| DE 10144076 A1 | 27-03-2003 | WO | 03023721 A2 | 20-03-2003 |
| | | EP | 1423827 A2 | 02-06-2004 |
| | | JP | 2005504272 T | 10-02-2005 |
| | | US | 2005049835 A1 | 03-03-2005 |
| DE 19536110 A1 | 03-04-1997 | FR | 2739414 A1 | 04-04-1997 |
| | | GB | 2305727 A | 16-04-1997 |
| | | US | 5739417 A | 14-04-1998 |
| US 5001931 A | 26-03-1991 | DE | 3812474 A1 | 10-11-1988 |
| | | JP | 2029209 C | 19-03-1996 |
| | | JP | 6005193 B | 19-01-1994 |
| | | JP | 63271132 A | 09-11-1988 |
| DE 3907419 A1 | 13-09-1990 | KEINE | | |
| EP 1284414 A | 19-02-2003 | DE | 10139759 A1 | 27-03-2003 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 61135939 B
- EP 0706039 A
- EP 1505270 A